# EUROPEAN PATENT SPECIFICATION

(11) **EP 3 943 422 B1**
(45) Date of publication and mention of the grant of the patent: **26.04.2023**
(21) Application number: 21182706.8
(22) Date of filing: 30.06.2021
(51) Int. Cl.: B65G 47/08, B65B 35/26, B65G 47/14

(54) **A DEVICE FOR SINGULARIZING PACKAGES ARRANGED ONE AGAINST THE OTHER IN A ROW**
VORRICHTUNG ZUM VEREINZELN VON IN EINER REIHE NEBENEINANDER ANGEORDNETEN VERPACKUNGEN
DISPOSITIF DE SINGULARISATION D'EMBALLAGES AGENCÉS LES UNS CONTRE LES AUTRES DANS UNE RANGÉE

(30) Priority: 20.07.2020 IT 202000017557
(43) Date of publication of application: 26.01.2022
(73) Proprietor: G.D S.p.A., 40133 Bologna (BO) (IT)
(72) Inventor: SPIRITO, Gilberto, I-40133 Bologna (IT); GAMBERINI, Giuliano, I-40133 Bologna (IT); FERRARI, Michele, I-40133 Bologna (IT)
(74) Representative: Frontoni, Stefano

(56) References cited:
- EP-A1- 0 538 765
- DE-A1- 2 103 627
- GB-A- 2 447 779
- US-A- 4 056 200
- US-A- 4 627 215

## Description

### Field of the invention

The present invention relates to a device for singularizing packages that are reciprocally arranged one against the other according to a linear arrangement, comprising:
- a singularizing drum, which is rotatable about a horizontal rotation axis;
- a first supplying unit that is arranged to supply the packages to a delivery position at the singularizing drum; wherein said first supplying unit is arranged to move the packages in a row, and in contact with each other, along a movement path that ends at the delivery position according to a given supplying direction;
- a second supplying unit, which is configured to receive the packages that have been separated by the singularizing drum, and to supply them individually to a device or machine, which is set downstream of the singularizing device,

A known device of the indicated type is described, for example, in the Italian patent application ITBO20110647 A1.

A device and method disclosing the preambles of claims 1 and 8 respectively are shown in document DE 21 03 627 A1.

In this known solution, the packages are stacked together inside the first supplying unit and are moved to the delivery position at the singularizing drum along a substantially radial direction. The drum is arranged with a plurality of housings, obtained on its side surface, to receive the packages carried by the first supplying unit. The package that reaches the delivery position is inserted inside one of the drum housings through a radial movement, and is then moved away and separated from the stack of the other packages by effect of the rotating movement of the drum.

During the operation of the described singularizing device, the packages are subjected to knocks and bounces, which can cause small damages, or rather, defects in the packages, especially due to high operating speeds of the device.

The present invention aims to provide an improved solution with respect to the prior art discussed, in particular, which is capable of subjecting the packages to more fluid and homogeneous movements.

This object is achieved by means of a singularizing device having the characteristics referred to in claim 1.

The present invention also relates to a method according to claim 8.

The claims form an integral part of the disclosure provided here.

Further characteristics and advantages of the present invention will become evident from the description that follows with reference to the attached drawings, provided purely by way of non-limiting example, wherein:
- Figure 1 represents a preferred embodiment of the singularizing device described here, according to an axonometric view;
- Figures 2 to 2c show an enlarged side view of a region of the device of Figure 1, in three different operating conditions of the device, respectively.

In the following description, various specific details are illustrated, aimed at a thorough understanding of the embodiments. The embodiments may be implemented without one or more of the specific details, or with other methods, components, materials, etc. In other cases, known structures, materials or operations are not shown or described in detail to avoid obscuring various aspects of the embodiments.

The references used here are only for convenience and do not therefore define the field of protection or the scope of the embodiments.

As anticipated at the beginning, the present invention relates to a device for singularizing packages that are reciprocally arranged one against the other according to a linear arrangement.

The device described here has been specifically designed for applications in the field of packaging smoking articles, for example, for singularizing packages of smoking articles. In any case, it will be understood that the solution described here can also be used indifferently in other fields, for example, for the packaging of food products, sanitary articles, pharmaceutical products, etc. to name just a few.

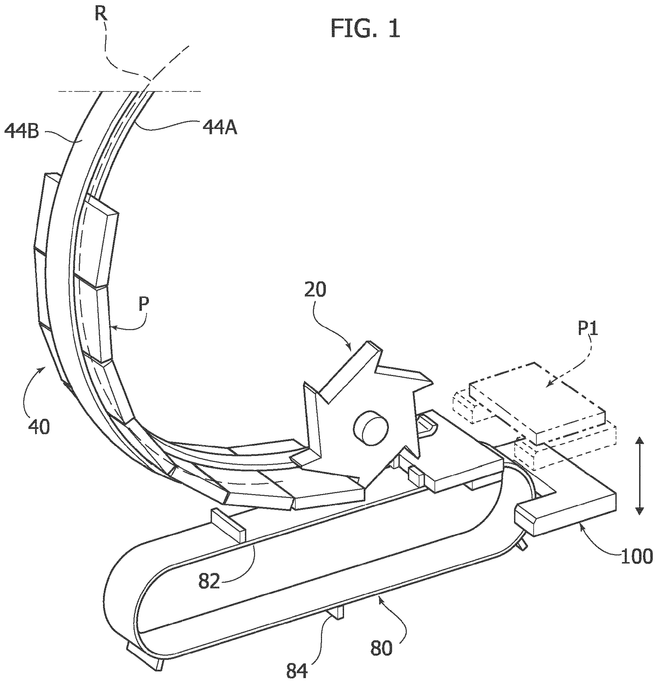

With reference to Figure 1, the singularizing device described here, indicated as a whole with the reference number 10, comprises:
- a singularizing drum 20, which is rotatable about a rotation axis I, which is preferably horizontal;
- a first supplying unit 40, which is arranged to supply packages P to a delivery position K at the singularizing drum 20, and
- a second supplying unit 80, which is arranged to receive the packages P separated from the singularizing drum 20, and to supply them - individually - to a device 100 downstream of the singularizing device. According to an alternative embodiment, the axis I of the drum can, for example, be vertical.

In the example shown, the packages P have a parallelepiped shape to simulate packages of smoking articles; in any case, the shape of the packages is - in no way - to be considered as limiting of the application field of the solution described here.

Furthermore, the downstream device 100 may, for example, be a pickup device belonging to a package treatment machine P.

Returning to the device 10, the first supplying unit 40 is arranged to move the packages P in a row and in contact with each other up to the delivery position K.

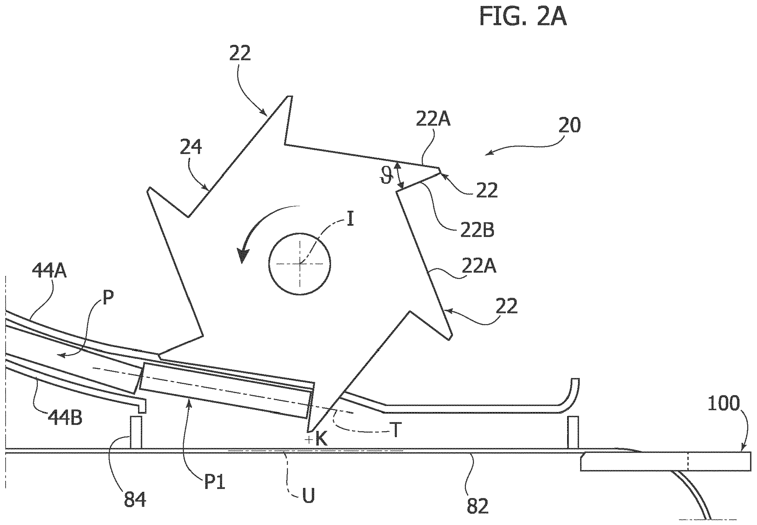

In preferred embodiments, such as the one illustrated, the supplying unit 40 consists of a gravity conveyor designed to move the row of packages P along a predetermined path R, which originates from an inlet section - not illustrated - and ends with an outlet section 42 at the delivery position K (Figure 2A).

In preferred embodiments, such as the one illustrated, the supplying unit 40 consists of a chute formed by two opposing guides 44A, 44B between which the passageway is defined for the packages P along the path R.

In preferred embodiments, such as the one illustrated, the path R develops starting from an upper region - not illustrated - wherein the aforesaid inlet section is located, according to a descending circular section that ends at the position K defining a supplying direction T.

The first package P1 of the row, therefore, reaches the delivery position K by moving along the direction T. Preferably, the supplying direction T is oriented according to an angle equal to or less than 60° with respect to the supplying direction U of the packages of the second supplying unit 80. In the example illustrated, the direction T is defined by the guide 44A, which, in its terminal section, extends along this direction up to the position K.

The singularizing drum 20 comprises a plurality of projecting elements 22, distributed in succession along its entire perimeter region, and mutually equidistant. These elements are arranged in such a way that each element and the successive one (with reference to the rotation direction of the drum) operate, respectively, to hold the package P1 with respect to a movement along the supplying direction T, and to push the same package along a direction S that is transverse to the direction T, and in a direction away from the supplying line T and consequently from the axis of rotation I, due to the rotation of the drum.

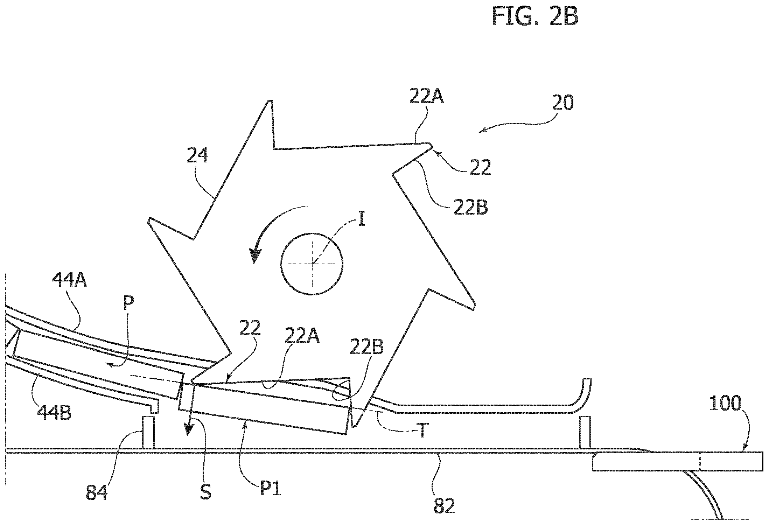

In particular, the first element 22 functions to hold the package P 1 so that its movement is controlled, but without stopping it (Figure 2A), while the second projecting element 22 intervenes to divert the package P1 in the transverse direction S towards the supplying unit 80, so as to separate it from the other packages arranged in a row in the supplying unit 40, and leave free the space for approaching a new package P1 to the delivery position K (Figure 2B). This new package P1 will also be retained by a first element 22 and then diverted by an additional element 22 towards the supplying unit 80.

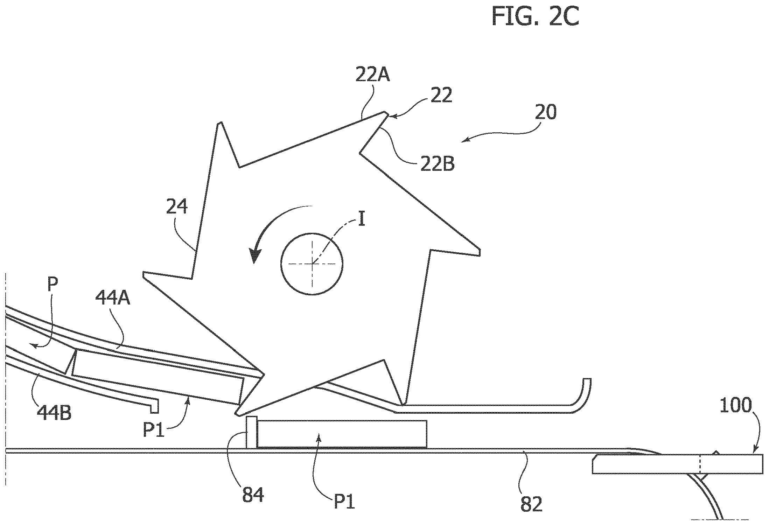

In preferred embodiments, such as the one illustrated, each projecting element 22 is delimited by a first surface 22A, and by a second surface 22B, which are parallel to the rotation axis I of the drum, and which define an acute angle θ between each other inside the drum. Preferably, the rotation axis I is not included within the acute angle θ facing the inside of the drum. In each projecting element 22, the surface 22A is designed to be arranged substantially parallel to the supplying direction T, in a first angular position of the drum 20 (Figure 2A), to carry out the pushing action along the direction S, on a package P1. On the other hand, the surface 22B is, instead, designed to be arranged transversely to the supplying direction T, in a second angular position of the drum successive to the first angular position - with reference to the rotation direction of the drum - to hold a subsequent package P1 along the direction T (Figure 2C).

As can be seen in Figure 2A, the surface 22B of an element 22, and the surface 22A of the successive element 22 (with reference to the rotation direction of the drum) define a seat 24 for receiving the package P1.

The second supplying unit 80 is positioned below the supplying unit 40 and the singularizing drum 20, and comprises a conveyor belt extending along a closed-loop path and equipped with an upper branch 82 arranged to receive the package P1 separated from the singularizing drum 20, and to supply it to the device 100 located downstream of the singularizing device, along the direction U.

In preferred embodiments, such as the one illustrated, the conveyor belt is equipped along its surface with a plurality of pusher elements 84, which are preferably constituted by flaps that are transverse to the longitudinal direction of the belt, and which have the function of defining an abutment surface intended to come into contact with the package P1 which is received by the drum 20.

The supplying unit 80 is arranged to operate in a synchronized manner with the singularizing drum 20, so that for each new package P1 that is separated from the drum 20, a pusher element 84 is ready to immediately bring itself into contact with it, and push it up to the device 100 (Figure 2C). Preferably, the supplying unit 80 operates according to an intermittent movement so that each element 84 is stationed near the delivery position K, waiting for the new package P 1, and is then immediately advanced to transfer the new package P1 to the device 100.

During operation, the singularizing drum 20 is driven in rotation preferably at a constant speed or - in any case - moderately oscillating in such a way as to generate - in the supplying unit 40 - a flow of packages P that advances continuously and without interruptions. The individual packages P1 which - one after the other - reach the delivery position K, are separated from the drum 20 by means of a deviation of their movement, but without being stopped. The separate P1 packages are then received, one after the other, by the supplying unit 80, which supplies them, individually, to the downstream device 100.

In view of the above, compared to the prior art discussed at the beginning, the device described here is able to subject the packages to more fluid and homogeneous movements, thus preserving their integrity even for high or very high operating speeds.

Of course, without prejudice to the principle of the invention, the details of construction and the embodiments may vary, even significantly, with respect to those illustrated here, purely by way of non-limiting example, without departing from the scope of the invention as defined by the attached claims.

## Claims

1. A device (10) for singularizing packages (P) that are reciprocally arranged one against the other according to a linear arrangement, comprising:
- a singularizing drum (20), which is rotatable about a rotation axis (I), which is preferably horizontal;
- a first supplying unit (40), which is configured to supply packages to a delivery position (K) at the singularizing drum (20);
- a second supplying unit (80), which is configured to receive the packages that have been separated by the singularizing drum (20) and to supply them individually to a device (100) or machine that is set downstream of the singularizing device,
wherein said first supplying unit (40) is configured to move the packages in a row and in contact with one another along a movement path (R), terminating at the delivery position (K) according to a given supplying direction (T),
and
the first supplying unit (40) consists of a gravity conveyor designed to move the row of packages (P) along a predetermined path (R), which originates from an inlet section, and ends with an outlet section (42) at the delivery position (K);
said drum (20) comprises at least one first and one second projecting element (22), which are angularly spaced apart from each other around the rotation axis (I) of the drum, and which are arranged, respectively, to retain the package (P1) with respect to its movement along the supplying direction (T), and to push the package (P1) along a direction (S) transverse to the supplying direction (T) and in a direction away from the rotation axis (I) of the drum, by effect of the rotation of said drum, so as to separate the package from the other packages arranged in a row, and divert it towards the second supplying unit (80); said device being **characterized in that**
the second supplying unit (80) comprises a conveyor belt extending along a closed-loop path, and equipped along its surface with a plurality of pushing elements (84), wherein the second supplying unit (80) is arranged to operate in a synchronized manner with the singularizing drum (20) so that each package that is separated from one of the projecting elements (22) of the drum and that is received on the second supplying unit (80), is pushed by a pusher element (84) of the belt up to the downstream device (100) or machine.

2. A device according to claim 1, wherein each projecting element (22) is delimited by a first and a second surface (22A, 22B), which are parallel to the rotation axis (I) of the drum, and which define an acute angle between them (θ) that is internal to the drum.

3. A device according to claim 1 or 2, wherein the drum (20) comprises a plurality of projecting elements (22) that are distributed in succession along the entire perimetral region of the drum.

4. A device according to claims 2 or 3, wherein, in each projecting element, the first surface (22A) is configured to set itself substantially parallel to the supplying direction (T) of the first unit, in a first angular position of the drum, for carrying out the pushing action on the package in the delivery position (K), and
the second surface (22B) is configured to arrange itself transversally to the supplying direction (T) of the first unit (40), in a second angular position of the drum, for holding the package that is approaching to the delivery position (K).

5. A device according to claim 4, wherein the second surface (22B) of a projecting element (22) and the first surface (22A) of the successive projecting element (22) define a seat (24) that is configured to receive the package that reaches the delivery position (K).

6. A device according to any one of the preceding claims, wherein the supplying direction (T) of the first unit (40) is oriented according to an angle equal to or smaller than 60° with respect to a supplying direction (U) of the second supplying unit (80).

7. A device according to any one of the preceding claims, wherein the second supplying unit (80) is provided with at least one pusher element (84) for pushing the package (P1), which has been separated, to the downstream device (100) or machine.

8. A method for singularizing packages (P) that are reciprocally arranged one against the other according to a linear arrangement, comprising:
- by means of a first supplying unit (40), supplying packages to a delivery position (K) at a singularizing drum (20), which is rotatable about a rotation axis (I), this being preferably horizontal;
- by means of the singularizing drum (20), separating the package (P 1) that reaches the delivery position (K) from the other packages; and
- by means of a second supplying unit (80), supplying the separated package to a downstream device (100) or machine;
wherein supplying packages to a delivery position (K) includes supplying the packages in a row and in contact with one another along a movement path (R) terminating at the delivery position (K) according to a given supplying direction (T),
the drum (20) comprising at least one first projection element and one second projection element (22), which are angularly spaced apart about the rotation axis (I) of the drum,
said first supplying unit (40) being constituted by a gravity conveyor,
the method comprises:
through said first supplying unit (40), moving the row of packages (P) along a predetermined path (R), which originates from an inlet section and ends with an outlet section (42) at the delivery position (K);
while the drum (20) rotates around its rotation axis (I), holding the package (P1) with respect to its movement along the supplying direction (T), by means of the first projecting element (22) of the drum, and by means of the second projecting element (22), pushing the package (P1) along a direction (S) transverse to the supplying direction (T), and in a direction away from the rotation axis of the drum (I), so as to separate the package (P 1) from the other packages (P) arranged in a row, and to divert it towards the second supplying unit (80); said method being **characterized in that**:
the second supplying unit (80) comprising a conveyor belt extending along a closed-loop path, and equipped along its surface with a plurality of pusher elements (84),
the method comprising that each package which is separated from one of the projecting elements (22) of the drum and which is received on the second supplying unit (80), is pushed by a pusher element (84) of the belt up to the downstream device (100) or machine.

9. A method according to claim 8, which includes, during the rotation of the drum (20), by means of the first or the second projecting element (22) of the drum, pushing a first package that reaches the delivery position (K), along a direction that is transverse to the supplying direction (T), and away from the rotation axis (I) of the drum, in a first angular position of the drum (20), and holding a second package with respect to its movement along the supplying direction (T), in a second angular position of the drum, which is successive to the first angular position, with respect to the rotation direction of the drum.

10. A method according to claims 8 or 9, wherein the drum (20) rotates at a velocity that is substantially constant, and the packages (P) are supplied to the delivery position (K) by the first supplying unit (40) according to an advancement movement that is at a substantially constant velocity.

11. A method according to any one of claims 8 to 10, wherein the second supplying unit operates according to an intermittent movement for transferring, one after another, each single package (P1) that has been separated by the drum (20) to the downstream device (100).

## Patentansprüche

1. Vorrichtung (10) zur Vereinzelung von Packungen (P), die gegenseitig aneinander in einer linearen Anordnung angeordnet sind, umfassend:
- eine Vereinzelungstrommel (20), die um eine Rotationsachse (I) drehbar ist, die vorzugsweise horizontal ist,
- eine erste Zuführungseinheit (40), die dazu ausgestaltet ist, einer Lieferposition (K) an der Vereinzelungstrommel (20) Packungen zuzuführen,
- eine zweite Zuführungseinheit (80), die dazu ausgestaltet ist, die Packungen, die von der Vereinzelungstrommel (20) getrennt worden sind, aufzunehmen und sie einzeln einer Vorrichtung (100) oder einer Maschine zuzuführen, die stromabwärts von der Vereinzelungsvorrichtung angeordnet ist,
wobei die erste Zuführungseinheit (40) dazu ausgestaltet ist, die Packungen in eine Reihe und in Kontakt miteinander entlang einer Bewegungsbahn (R) zu bewegen, die an der Lieferposition (K) gemäß einer gegebenen Zuführrichtung (T) endet,
und
die erste Zuführungseinheit (40) aus einem Schwerkraftförderer besteht, der dazu ausgelegt ist, die Reihe von Packungen (P) entlang einer vorbestimmten Bahn (R) zu bewegen, die an einem Einlassabschnitt beginnt und mit einem Auslassabschnitt (42) an der Lieferposition (K) endet,
die Trommel (20) mindestens ein erstes und ein zweites vorragendes Element (22) umfasst, die um die Rotationsachse (I) der Trommel winkelförmig voneinander beabstandet sind und die jeweils dazu angeordnet sind, die Packung (P1) bezüglich ihrer Bewegung entlang der Zuführrichtung (T) zu halten und die Packung (P1) durch die Wirkung der Drehung der Trommel entlang einer quer zu der Zuführrichtung (T) verlaufenden Richtung (S) und in eine von der Rotationsachse (I) der Trommel weg gehenden Richtung zu schieben, um die Packung von den anderen in einer Reihe angeordneten Packungen zu trennen und sie zu der zweiten Zuführungseinheit (80) hin umzuleiten, **dadurch gekennzeichnet, dass**
die zweite Zuführungseinheit (80) ein Förderband umfasst, das sich entlang einer in sich geschlossenen Bahnschleife erstreckt und entlang seiner Oberfläche mit einer Vielzahl von Schiebeelementen (84) ausgestattet ist, wobei die zweite Zuführungseinheit (80) dazu angeordnet ist, mit der Vereinzelungstrommel (20) synchronisiert zu wirken, so dass jede Packung, die von einem der vorragenden Elemente (22) der Trommel getrennt wird und die auf der zweiten Zuführungseinheit (80) aufgenommen worden ist, mittels des Schieberelements (84) des Bands zu der stromabwärtigen Vorrichtung (100) oder Maschine geschoben wird.

2. Vorrichtung nach Anspruch 1, wobei jedes vorragende Element (22) durch eine erste und eine zweite Fläche (22A, 22B) begrenzt wird, die parallel zu der Rotationsachse (I) der Trommel verlaufen und die einen spitzen Winkel (θ) zwischen sich definieren, der nach innen zu der Trommel liegt.

3. Vorrichtung nach Anspruch 1 oder 2, wobei die Trommel (20) eine Vielzahl von vorragenden Elementen (22) umfasst, die in einer Abfolge entlang des gesamten Perimeterbereichs der Trommel verteilt sind.

4. Vorrichtung nach Anspruch 2 oder 3, wobei bei jedem vorragenden Element die erste Fläche (22A) dazu ausgestaltet ist, sich im Wesentlichen parallel zu der Zuführrichtung (T) der ersten Einheit in einer ersten Winkelposition der Trommel zu stellen, um den Schiebevorgang an der Packung in der Lieferposition (K) auszuführen, und
die zweite Fläche (22B) dazu ausgestaltet ist, sich quer zu der Zuführrichtung (T) der ersten Einheit (40) in einer zweiten Winkelposition der Trommel anzuordnen, um die sich der Lieferposition (K) nähernde Packung zu halten

5. Vorrichtung nach Anspruch 4, wobei die zweite Fläche (22B) eines vorragenden Elements (22) und die erste Fläche (22A) des darauffolgenden vorragenden Elements (22) einen Sitz (24) definieren, der zur Aufnahme der die Lieferposition (K) erreichende Packung ausgestaltet ist.

6. Vorrichtung nach einem der vorhergehenden Ansprüche, wobei die Zuführrichtung (T) der ersten Einheit (40) bezüglich der Zuführrichtung (U) der zweiten Zuführungseinheit (80) in einem Winkel ausgerichtet ist, der gleich oder kleiner als 60° ist.

7. Vorrichtung nach einem der vorhergehenden Ansprüche, wobei die zweite Zuführungseinheit (80) mit mindestens einem Schieberelement (84) zum Schieben der Packung (P1), die abgetrennt worden ist, zu der stromabwärtigen Vorrichtung (100) oder Maschine versehen ist.

8. Verfahren zur Vereinzelung von Packungen (P), die gegenseitig aneinander in einer linearen Anordnung angeordnet sind, umfassend:
- Zuführen von Packungen mittels einer ersten Zuführungseinheit (40) zu einer Lieferposition (K) an einer Vereinzelungstrommel (20), die um eine Rotationsachse (I) drehbar ist, wobei dies vorzugsweise horizontal ist,
- Trennen der Packung (P1), die die Lieferposition (K) erreicht, von den anderen Packungen mittels der Vereinzelungstrommel (20) und
- Zuführen der abgetrennten Packung zu einer stromabwärtigen Vorrichtung (100) oder Maschine mittel einer zweiten Zuführungseinheit (80),
wobei zum Zuführen von Packungen zu einer Lieferposition (K) das Zuführen der Packungen in einer Reihe und in Kontakt miteinander entlang einer Bewegungsbahn (R) gehört, die an der Lieferposition (K) gemäß einer gegebenen Zuführrichtung (T) endet,
wobei die Trommel (20) mindestens ein erstes vorragendes Element und ein zweites vorragendes Element (22) umfasst, die um die Rotationsachse (I) der Trommel winkelmäßig beabstandet sind,
wobei die erste Zuführungseinheit (40) aus einem Schwerkraftförderer besteht,
wobei das Verfahren Folgendes umfasst:
Bewegen der Reihe von Packungen (P) entlang einer vorbestimmten Bahn (R), die an einem Einlassabschnitt beginnt und mit einem Auslassabschnitt (42) an der Lieferposition (K) endet, durch die erste Zuführungseinheit (40),
Halten der Packung (P1) bezüglich ihrer Bewegung entlang der Zuführrichtung (T) mittels des ersten vorragenden Elements (22) der Trommel, während sich die Trommel (20) um ihre Rotationsachse (I) dreht, und Schieben der Packung (P1) mittels des zweiten vorragenden Elements (22) entlang einer quer zu der Zuführrichtung (T) verlaufenden Richtung (S) und in eine von der Rotationsachse (I) der Trommel weg gehenden Richtung, um die Packung (P1) von den anderen in einer Reihe angeordneten Packungen (P) zu trennen und sie zu der zweiten Zuführungseinheit (80) hin umzuleiten,
**dadurch gekennzeichnet, dass**:
die zweite Zuführungseinheit (80) ein Förderband umfasst, das sich entlang einer in sich geschlossenen Bahnschleife erstreckt und entlang seiner Oberfläche mit einer Vielzahl von Schiebeelementen (84) ausgestattet ist,
wobei das Verfahren umfasst, dass jede Packung, die von einem der vorragenden Elemente (22) der Trommel getrennt wird und die auf der zweiten Zuführungseinheit (80) aufgenommen worden ist, mittels eines Schieberelements (84) des Bands zu der stromabwärtigen Vorrichtung (100) oder Maschine geschoben wird.

9. Verfahren nach Anspruch 8, zu dem gehört, dass eine erste Packung, die die Lieferposition (K) erreicht, während der Drehung der Trommel (20) mittels des ersten oder des zweiten vorragenden Elements (22) der Trommel entlang einer quer zu der Zuführrichtung (T) verlaufenden Richtung und weg von der Rotationsachse (I) der Trommel in einer ersten Winkelposition der Trommel (20) geschoben wird und eine zweite Packung bezüglich ihrer Bewegung entlang der Zuführrichtung (T) in einer zweiten Winkelposition der Trommel, die bezüglich der Rotationsrichtung der Trommel auf die erste Winkelposition folgt, gehalten wird.

10. Verfahren nach Anspruch 8 oder 9, wobei sich die Trommel (20) mit einer Geschwindigkeit dreht, die im Wesentlichen konstant ist, und die Packungen (P) mittels der ersten Zuführungseinheit (40) gemäß einer Vorschubbewegung, die bei einer im Wesentlichen konstanten Geschwindigkeit erfolgt, zu der Lieferposition (K) zugeführt werden.

11. Verfahren nach einem der Ansprüche 8 bis 10, wobei die zweite Zuführungseinheit zum Transferieren einer mittels der Trommel (20) abgetrennten einzelnen Packung (P1) nach der anderen zu der stromabwärtigen Vorrichtung (100) mit einer intermittierenden Bewegung arbeitet.

## Revendications

1. Dispositif (10) de singularisation d'emballages (P) qui sont réciproquement agencés les uns contre les autres selon un agencement linéaire, comprenant :
un tambour de singularisation (20), qui peut tourner autour d'un axe de rotation (I), qui est de préférence horizontal ;
une première unité d'alimentation (40), qui est conçue pour fournir des emballages à une position de livraison (K) au niveau du tambour de singularisation (20) ;
une seconde unité d'alimentation (80), qui est conçue pour recevoir les emballages qui ont été séparés par le tambour de singularisation (20) et pour les fournir individuellement à un dispositif (100) ou une machine qui est placé en aval du dispositif de singularisation,
ladite première unité d'alimentation (40) étant conçue pour déplacer les emballages dans une rangée et en contact les uns avec les autres le long d'un trajet de déplacement (R), se terminant au niveau de la position de livraison (K) selon une direction d'alimentation (T) donnée, et
la première unité d'alimentation (40) consistant en un transporteur par gravité conçu pour déplacer la rangée d'emballages (P) le long d'un trajet prédéfini (R), qui part d'une section d'entrée et se termine par une section de sortie (42) au niveau de la position de livraison (K) ;
ledit tambour (20) comprenant au moins un premier et un second élément en saillie (22), qui sont espacés angulairement l'un de l'autre autour de l'axe de rotation (I) du tambour, et qui sont conçus, respectivement, pour retenir l'emballage (P1) par rapport à son déplacement le long de la direction d'alimentation (T), et pour pousser l'emballage (P1) le long d'une direction (S) transversale à la direction d'alimentation (T) et dans une direction à l'opposé de l'axe de rotation (I) du tambour, par l'effet de la rotation dudit tambour, de sorte à séparer l'emballage des autres emballages agencés dans une rangée, et à le dévier vers la seconde unité d'alimentation (80) ; ledit dispositif étant **caractérisé en ce que**
la seconde unité d'alimentation (80) comprend un transporteur à courroie s'étendant le long d'un trajet en boucle fermée, et équipé le long de sa surface d'une pluralité d'éléments de poussée (84), la seconde unité d'alimentation (80) étant conçue pour fonctionner de manière synchronisée avec le tambour de singularisation (20) de sorte que chaque emballage qui est séparé de l'un des éléments en saillie (22) du tambour et qui est reçu sur la seconde unité d'alimentation (80), soit poussé par un élément de poussée (84) de la courroie jusqu'au dispositif (100) ou à la machine en aval.

2. Dispositif selon la revendication 1, chaque élément en saillie (22) étant délimité par une première et une seconde surface (22A, 22B), qui sont parallèles à l'axe de rotation (I) du tambour, et qui définissent entre elles un angle aigu (Θ) qui est interne au tambour.

3. Dispositif selon la revendication 1 ou 2, le tambour (20) comprenant une pluralité d'éléments en saillie (22) qui sont répartis successivement le long de toute la région périmétrique du tambour.

4. Dispositif selon la revendication 2 ou 3, dans chaque élément en saillie, la première surface (22A) étant conçue pour se placer sensiblement parallèlement à la direction d'alimentation (T) de la première unité, dans une première position angulaire du tambour, pour effectuer l'action de poussée sur l'emballage dans la position de livraison (K), et
la seconde surface (22B) étant conçue pour se disposer transversalement à la direction d'alimentation (T) de la première unité (40), dans une seconde position angulaire du tambour, pour maintenir l'emballage qui s'approche de la position de livraison (K).

5. Dispositif selon la revendication 4, la seconde surface (22B) d'un élément en saillie (22) et la première surface (22A) de l'élément en saillie (22) successif définissant un siège (24) qui est conçu pour recevoir l'emballage qui atteint la position de livraison (K).

6. Dispositif selon l'une quelconque des revendications précédentes, la direction d'alimentation (T) de la première unité (40) étant orientée selon un angle égal ou inférieur à 60° par rapport à une direction d'alimentation (U) de la seconde unité d'alimentation (80) .

7. Dispositif selon l'une quelconque des revendications précédentes, la seconde unité d'alimentation (80) étant pourvue d'au moins un élément pousseur (84) pour pousser l'emballage (P1), qui a été séparé, vers le dispositif (100) ou la machine en aval.

8. Procédé pour singulariser des emballages (P) qui sont agencés réciproquement les uns contre les autres selon un agencement linéaire, comprenant les étapes consistant à :
au moyen d'une première unité d'alimentation (40), fournir des emballages à une position de livraison (K) au niveau d'un tambour de singularisation (20), qui peut tourner autour d'un axe de rotation (I), celui-ci étant de préférence horizontal ;
au moyen du tambour de singularisation (20), séparer l'emballage (P1) qui atteint la position de livraison (K) des autres emballages ; et
au moyen d'une seconde unité d'alimentation (80), fournir l'emballage séparé à un dispositif (100) ou une machine en aval ;
la fourniture d'emballages à une position de livraison (K) comprenant l'étape consistant à fournir des emballages dans une rangée et en contact les uns avec les autres le long d'un trajet de déplacement (R) se terminant au niveau de la position de livraison (K) selon une direction d'alimentation (T) donnée,
le tambour (20) comprenant au moins un premier élément de saillie et un second élément de saillie (22), qui sont espacés angulairement autour de l'axe de rotation (I) du tambour,
ladite première unité d'alimentation (40) étant constituée d'un transporteur par gravité,
le procédé comprenant les étapes consistant à :
par l'intermédiaire de ladite première unité d'alimentation (40), déplacer la rangée d'emballages (P) le long d'un trajet prédéfini (R), qui part d'une section d'entrée et se termine par une section de sortie (42) au niveau de la position de livraison (K) ;
pendant que le tambour (20) tourne autour de son axe de rotation (I), maintenir l'emballage (P1) par rapport à son déplacement le long de la direction d'alimentation (T), au moyen du premier élément en saillie (22) du tambour, et au moyen du second élément en saillie (22), pousser l'emballage (P1) le long d'une direction (S) transversale à la direction d'alimentation (T), et dans une direction à l'opposé de l'axe de rotation du tambour (I), de sorte à séparer l'emballage (P1) des autres emballages (P) agencés dans une rangée, et à le dévier vers la seconde unité d'alimentation (80) ; ledit procédé étant **caractérisé en ce que** :
la seconde unité d'alimentation (80) comprend un transporteur à courroie s'étendant le long d'un trajet en boucle fermée, et est équipée le long de sa surface d'une pluralité d'éléments pousseurs (84),
le procédé comprenant le fait que chaque emballage qui est séparé de l'un des éléments en saillie (22) du tambour et qui est reçu sur la seconde unité d'alimentation (80), est poussé par un élément pousseur (84) de la courroie jusqu'au dispositif (100) ou à la machine en aval.

9. Procédé selon la revendication 8, qui comprend, pendant la rotation du tambour (20), au moyen du premier ou du second élément en saillie (22) du tambour, les étapes consistant à pousser un premier emballage qui atteint la position de livraison (K), le long d'une direction qui est transversale à la direction d'alimentation (T), et à l'opposé de l'axe de rotation (I) du tambour, dans une première position angulaire du tambour (20), et maintenir un second emballage par rapport à son déplacement le long de la direction d'alimentation (T), dans une seconde position angulaire du tambour, qui est successive à la première position angulaire, par rapport à la direction de rotation du tambour.

10. Procédé selon la revendication 8 ou 9, le tambour (20) tournant à une vitesse qui est sensiblement constante, et les emballages (P) étant fournis à la position de livraison (K) par la première unité d'alimentation (40) selon un déplacement d'avancement qui est à une vitesse sensiblement constante.

11. Procédé selon l'une quelconque des revendications 8 à 10, la seconde unité d'alimentation fonctionnant selon un déplacement intermittent pour transférer, l'un après l'autre, chaque emballage (P1) individuel qui a été séparé par le tambour (20) vers le dispositif (100) en aval.
